# EUROPEAN PATENT SPECIFICATION

(11) **EP 4 623 477 B1**
(45) Date of publication and mention of the grant of the patent: **25.11.2026**
(21) Application number: 23793253.8
(22) Date of filing: 16.10.2023
(51) Int. Cl.: H01M 10/613, H01M 10/625, F16L 39/00, H01M 10/6567, F28F 9/02, H01M 10/6556, F28F 3/12

(54) **BATTERY PACK ASSEMBLY FOR VEHICLE AND VEHICLE**
BATTERIEPACKANORDNUNG FÜR FAHRZEUG UND FAHRZEUG
ENSEMBLE BLOC-BATTERIE POUR VÉHICULE ET VÉHICULE

(30) Priority: 22.11.2022 CN 202211464550
(43) Date of publication of application: 01.10.2025
(73) Proprietor: Stellantis Auto SAS, 78300 Poissy (FR)
(72) Inventor: JIA, Shengnan, Shanghai, 200233 (CN); WU, Haiping, Shanghai, 200233 (CN); HE, Yuheng, Shanghai, 200233 (CN); WAN, Lei, Shanghai, 200233 (CN); WANG, Tianxiang, Shanghai, 200233 (CN); MAO, Xiao Ping, Shanghai, 200233 (CN)
(74) Representative: PSIP
(86) International application number: PCT/EP2023/078606
(87) International publication number: WO 2024/110118

(56) References cited:
- WO-A1-2021/258792
- US-A1- 2020 365 850
- US-A1- 2022 196 346
- US-B2- 6 776 225

## Description

### RELATED FIELD

The present application relates to the field of new energy vehicles, and in particular to a battery pack assembly for a vehicle. The present application further relates to a vehicle having the battery pack assembly.

### BACKGROUND

The new energy vehicle is equipped with a battery pack to provide power for the vehicle. A cooling assembly is generally provided on the battery pack, in order for the battery pack to operate at a suitable temperature. The cooling assembly is in communication with a coolant source through a connection assembly, so that coolant can be supplied to the cooling assembly. Generally, the connection assembly is required to have good sealing performance to meet the test requirements and thus ensure good performance of the cooling assembly.

The patent document CN113874676A disclosed a connection assembly for connecting a coolant tube in a cooling assembly of a battery pack. The connection assembly disclosed therein includes a first portion formed integrally with an end portion of the tube and a second portion freely mounted around the tube. The second portion is rotatable relative to the first portion. However, this patent document does not involve how to improve the sealing performance of the connection assembly.

The prior art is also known from documents US 6 776 225 B2, WO 2021/258792 A1 and US 2020/365850 A1.

### SUMMARY

In view of the above technical problems, a first aspect of the present application proposes a battery pack assembly for a vehicle. The battery pack assembly includes: a battery pack body; a cooling assembly including a housing which is connected to the battery pack body and at least two connection pipes which extend from an interior of the housing; a connection assembly including a flange arranged on the housing; the flange being provided with at least two mounting holes which match the at least two connection pipes and a spacing portion located between the adjacent mounting holes; the inner surface of the side wall of each mounting hole being provided with at least one rib which protrudes radially inwardly and extends circumferentially, and the rib having a clamping section which corresponds to the spacing portion; and a sealing sleeve, the sealing sleeve being mounted on the rib and including a sealing portion which is located between the flange and the housing to seal a gap between the flange and the housing. The flange is adapted to be assembled with the housing, and the spacing portion is adapted to be bent toward the housing, so that the clamping section and the spacing portion are in sealing contact at least with the corresponding portion of the sealing sleeve.

In an embodiment, the flange includes a middle region and two end regions located on two sides of the middle region; the mounting holes and the spacing portion are located in the middle region; at least one fastener is provided in each end region to secure the flange to the housing; and a boss is provided, between the flange and the housing, on one side of each fastener away from the middle region, so that the middle region and the spacing portion are bent toward the housing after the flange is secured to the housing.

In an embodiment, the boss is configured on the flange or the housing.

In an embodiment, the boss is configured as an arc partially surrounding the corresponding fastener.

In an embodiment, two ends of the boss in its lengthwise direction are each provided with a transition ramp.

In an embodiment, the height of the boss is between 0.5 mm and 1 mm.

In an embodiment, each rib includes a first extending portion protruding radially inwardly from the inner surface of the side wall of the corresponding mounting hole and a second extending portion extending from the first extending portion in a direction parallel to the axial direction of the mounting hole; and the outer surface of the side wall of the sealing sleeve is provided with a mounting groove matching the first extending portion and the second extending portion.

In an embodiment, the second extending portion includes an upper section located above the first extending portion and a lower section located below the first extending portion.

In an embodiment, the sealing portion of the sealing sleeve is located between the first extending portion and the housing and is radially limited by the lower section.

In an embodiment, a width of the sealing portion along the radial direction of the mounting hole is between 3 mm and 4 mm.

In an embodiment, the sealing sleeve further includes an axial extension covering the inner surface of the side wall of the corresponding mounting hole and an annular wing extending radially inwardly from the axial extension; a central opening corresponding to the respective mounting hole is configured in the wing, and the connection pipe extends through the central opening.

In an embodiment, at least two positioning pins are configured on one of the flange and the housing, and at least two positioning holes corresponding to the at least two positioning pins are configured in the other of the flange and the housing, and each positioning pin tightly fits within the corresponding positioning hole.

A second aspect of the present application proposes a vehicle. The vehicle includes: a chassis on which a vehicle body is mounted; and the battery pack assembly for a vehicle as described above, the battery pack assembly being laid on the chassis.

The beneficial effects of the present application are as follows. In the battery pack assembly of the present application, the sealing sleeve is stably installed in the mounting hole via the rib on the side wall of the mounting hole, which improves the stability of the sealing portion of the sealing sleeve, so that the gap between the flange and the housing can be well sealed by the sealing portion. Besides, after the flange is installed on the housing, the spacing portion located between the adjacent mounting holes is bent toward the housing, so that the clamping section of the rib and the spacing portion tightly clamp the corresponding portion of the sealing sleeve, which improves the sealing performance at the spacing portion, and also improves the sealing performance of the connection assembly as a whole.

### BRIEF DESCRIPTION OF THE DRAWINGS

The present disclosure will be further described in the subsequent detailed description based on multiple accompanying drawings by means of non-limiting examples of typical embodiments of the present disclosure. The accompanying drawings are not drawn to actual scale.
FIG. 1 schematically shows a vehicle according to an embodiment of the present application.
FIG. 2a schematically shows a portion of a battery pack assembly according to an embodiment of the present application, particularly showing connection pipes and a connection assembly.
FIG. 2b schematically shows a state of the portion of the battery pack assembly shown in FIG. 2a with a flange being removed.
FIG. 3 schematically shows a section of the connection assembly.
FIG. 4 schematically shows the flange.
FIG. 5 schematically shows a surface of the flange adapted to be in contact with the housing.
FIG. 6 is an enlarged view which schematically shows the engagement relationship between a rib and a sealing sleeve.
FIG. 7 schematically shows another section of the connection assembly, particularly showing positioning pins and positioning holes.

### DETAILED DESCRIPTION

The details presented herein are exemplary and are used only for illustrative discussion of embodiments of the present application. They are presented in the cause of providing what is believed to be the most useful and readily understood description of the principles and conceptual aspects of the present disclosure. At this point, no attempt is made to show structural details of the present disclosure in more detail than is necessary for the fundamental understanding of the present disclosure. Those skilled in the art may clearly understand how to implement several forms of the present disclosure in practice from the description and accompanying drawings.

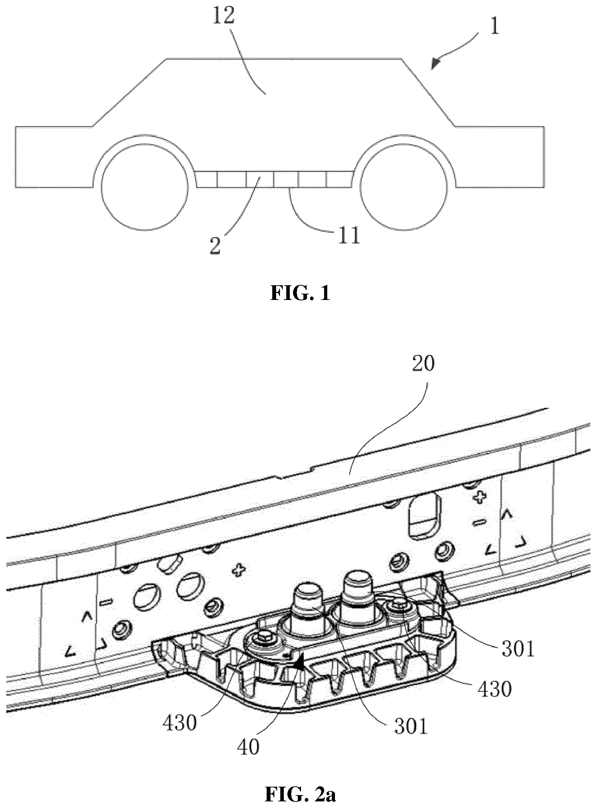

FIG. 1 schematically shows a vehicle 1 according to an embodiment of the present application. As shown in FIG. 1, the vehicle 1 includes a chassis 11 and a vehicle body 12 on the chassis 11. A battery pack assembly 2 is laid on the chassis 11.

Furthermore, in the present application, the terms "up" and "down" are generally used with reference to the installation state of the battery pack assembly, wherein "up" refers to a direction pointing to the top of the vehicle, and "down" refers to a direction opposite to "up".

The battery pack assembly 2 will be described below with reference to FIGS. 2a to 7.

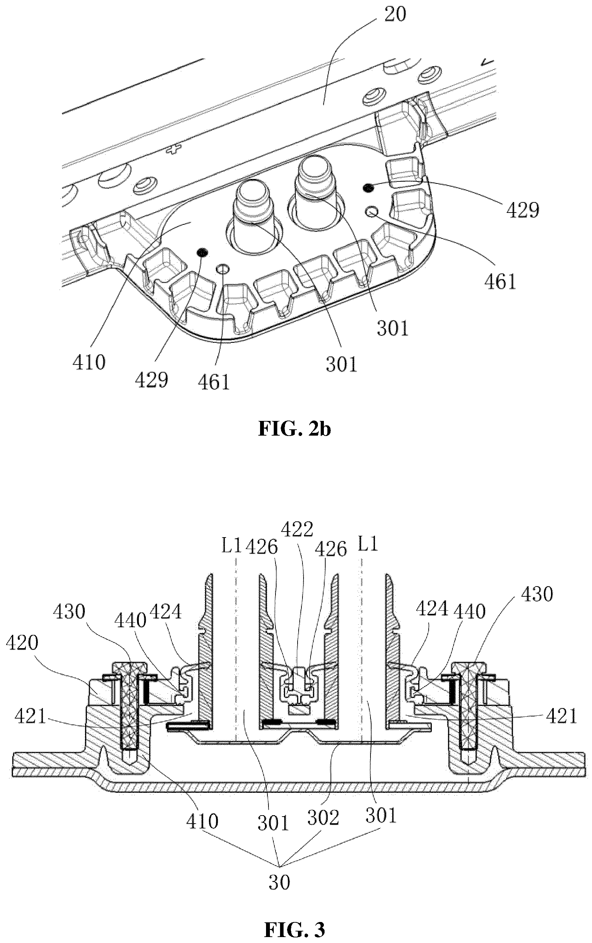

As shown in FIGS. 2a and 3, the battery pack assembly 2 includes a battery pack body 20 having a cooling assembly (not shown), a connection assembly 40 connected to the battery pack body 20, and a sealing sleeve 424.

Specifically, the cooling assembly 30 includes a housing 410 connected to the battery pack body 20 and at least two connection pipes 301 extending from the interior of the housing 410 and allowing inflow and outflow of coolant. Optionally, the cooling assembly further includes a heat exchanger 302 located inside the housing 410. In this way, the coolant can exchange heat with the battery pack body 20 via the heat exchanger 302, so that the battery pack body 20 operates at a suitable temperature. Those are already known to those skilled in the art and will not be described here.

Still as shown in FIG. 3, the connection assembly 40 includes the housing 410 connected to the battery pack body 20 and a flange 420 arranged on the housing 410. The flange 420 is provided with at least two mounting holes 421 matching the at least two connection pipes 301 and a spacing portion 422 between the adjacent mounting holes 421. The inner surface of the side wall of each mounting hole 421 is provided with at least one rib 440 protruding radially inwardly and extending circumferentially. A portion of the rib 440 which corresponds to the spacing portion 422 forms a clamping section 426.

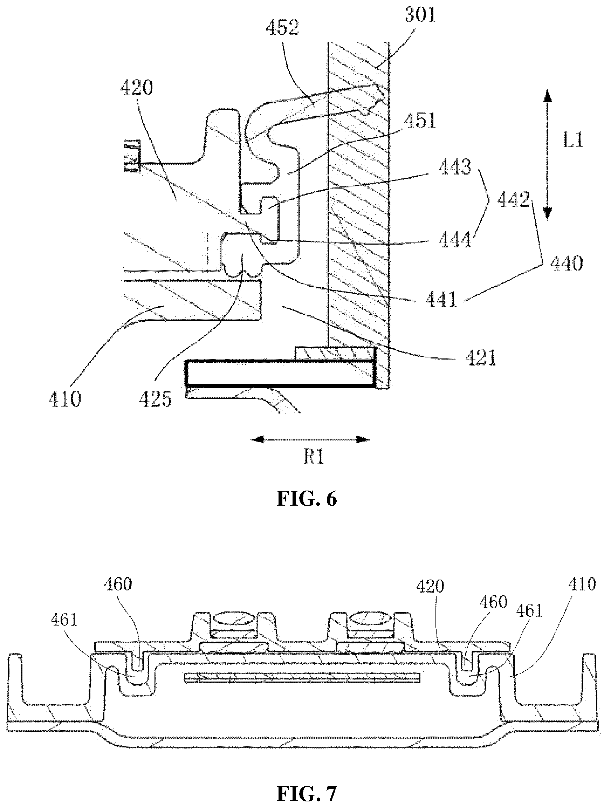

Still as shown in FIG. 3, the sealing sleeve 424 is mounted on the rib 440. The sealing sleeve 424 includes a sealing portion 425 (as shown in FIG. 6) located between the flange 420 and the housing 410 to seal a gap between the flange 420 and the housing 410.

After the flange 420 is mounted on the housing 410, the spacing portion 422 is bent toward the housing 410, so that the clamping section 426 of the rib 440 and the spacing portion 422 are in sealing contact at least with the corresponding portion of the sealing sleeve 424.

In the battery pack assembly 2 of the present application, the sealing sleeve 424 is stably installed in the mounting hole 421 via the rib 440, so that the sealing portion 425 of the sealing sleeve 424 can also be stably positioned between the flange 420 and the housing 410 to well seal the gap between the flange 420 and the housing 410, thereby improving the sealing performance of the connection assembly 40. Furthermore, in the battery pack assembly 2 of the present application, the spacing portion 422, due to its narrower width, has a weaker strength than the other portions of the flange 420. Thus after the flange 320 is mounted on the housing 410, the spacing portion 422 is bent slightly toward the housing 410, so that the gap between the clamping section 426 of the rib 440 and the spacing portion 422 is reduced, and thereby the corresponding portion of the sealing sleeve 424 can be squeezed by the clamping section 426 and the spacing portion 422. In this way, the clamping section 426 and the spacing portion 422 are in closer contact with the corresponding portion of the sealing sleeve 424, thereby improving the sealing performance at the spacing portion 422, and also improving the sealing performance of the connection assembly 40 as a whole.

Optionally, the battery pack body 20 is substantially rectangular to facilitate its installation on the chassis 11.

Optionally, the connection assembly 40 may be located at an edge of the battery pack body 20 (as shown in FIG. 2a). Of course, the connection assembly 40 may also be located at other positions of the battery pack body 20 according to the actual situation.

Two connection pipes 301 are provided. One pipe is used for the inflow of the coolant, and the other pipe is used for the outflow of the coolant. Correspondingly, two mounting holes 421 are configured in the connection assembly 40 also. In other embodiments, more connection pipes 301 may be provided according to actual needs, and a corresponding number of the mounting holes 421 may be configured in the connection assembly 40.

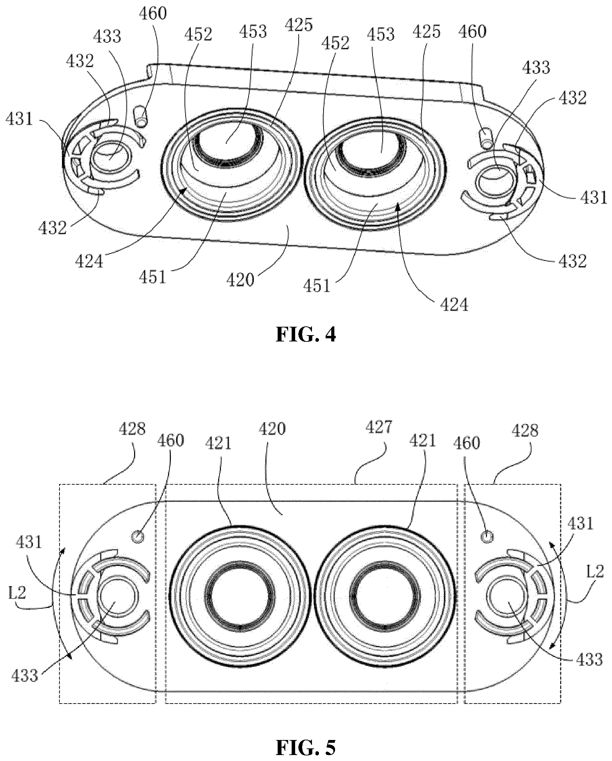

Optionally, as shown in FIGS. 4 and 5, the flange 420 includes a middle region 427 and two end regions 428 located on two sides of the middle region 427. The mounting holes 421 and the spacing portion 422 are located within the middle region 427. A first fixing hole 433 is configured in each end region 428, and a corresponding second fixing hole 429 (as shown in FIG. 2b) is configured in the housing 410. The flange 420 is secured to the housing 410 via a fastener 430 (as shown in FIG. 2a) mounted into the first fixing hole 433 and the second fixing hole 429. Between the flange 420 and the housing 410, a boss 431 is provided on one side of each fastener 430 away from the middle region 427. Thus, when the fasteners 430 are installed, the middle region 427 of the flange 420 automatically bends and deforms toward the housing 410 under the support of the bosses 431 to the end regions 428 of the flange 420, making the spacing portion 422 also automatically bend and deform toward the housing 410. This causes a closer contact of the clamping section 426 and the spacing portion 422 at least with the corresponding portion of the sealing sleeve 424, thereby improving the sealing performance of the connection assembly 40.

On the whole, the flange 420 is substantially oblong, and the shape of the housing 410 matches the shape of the flange 420. Two fasteners 430 are respectively provided in the two end regions 428 in the lengthwise direction of the flange 420, which facilitates the provision of the fasteners 430 and the mounting holes 421. In another embodiment, the flange 420 and the housing 410 may also be configured in other shapes.

More than two fasteners 430 may be provided, and be uniformly distributed in the two end regions 428 of the flange 420. In this case, a boss 431 is provided on the side of at least one fastener 430 in each end region 428. Optionally, the fastener 430 is a bolt. Correspondingly, the first fixing hole 433 and the second fixing hole 429 are bolt holes.

Optionally, as also shown in FIGS. 4 and 5, the boss 431 is configured on the flange 420. In this way, the boss 431 can be integrally formed with the flange 420, which facilitates the manufacturing of the battery pack assembly 2. In another embodiment, the boss 431 may also be configured on the housing 410.

Optionally, as shown in FIG. 5, the boss 431 is configured as an arc partially surrounding the corresponding fastener 430. In this way, after the fastener 430 is installed, the stability of the flange 420 is better, which helps to reduce the sway of the flange 420 relative to the housing 410, and thereby improves the sealing performance of the sealing portion 425 and the connection assembly 40.

Optionally, the boss 431 has a shape of an arc concentric with the corresponding fastener 430. This facilitates precise positioning of the boss 431.

In an embodiment, the central angle of the boss 431 is greater than or equal to 90 degrees and less than or equal to 180 degrees, and the width of the boss 431 is between 1 cm and 3 cm. In this way, the boss 431 has a longer length and a larger width, so that the boss 431 has a larger contact area with the housing 410, which helps to further improve the stability of the flange 420, thereby further improving the sealing performance of the connection assembly 40. It should be understood that the boss 431 can also be configured as an arc of other dimensions as long as it can stably support the flange 420.

Optionally, the height of the boss 431 is between 0.5 mm and 1 mm. In the assembled state, the boss 431 with such height can cause the spacing portion 422 to bend to a proper degree towards the housing 410, so that the sealing sleeve 424 can be in sealing contact with the clamping section 426 and the spacing portion 422, while the flange 420 cannot be excessively bent and deformed. Thus, the sealing portion 425 can well seal the gap between the flange 420 and the housing 410 to ensure the good sealing performance of the connecting assembly 40. Besides, the height of the boss 431 is not too large, which facilitates the stable installation of the fastener 430, thereby improving the stability of the flange 420, reducing the sway of the flange 420 relative to the housing 410, and further improving the sealing performance of the connection assembly 40. Of course, the boss 431 can be configured to have other heights according to the actual situation, which will not be repeated here.

As also shown in FIGS. 4 and 5, two ends of the boss 431 in its lengthwise direction L2 are each provided with a transition ramp 432. Thus, there are no sharp edges and corners at the boss 431, which helps to protect the housing 410.

Optionally, the boss 431 may also be configured in other shapes as long as the boss can provide suitable support for the corresponding end region of the flange. For example, the boss may be configured in a shape of a straight line or a wavy line. Further, the boss 431 may be configured to include multiple discrete bumps which are arranged in an arc partially surrounding the corresponding fastener 430.

Optionally, as shown in FIG. 6, each rib 440 includes a first extending portion 441 protruding radially inwardly from the inner surface of the side wall of the corresponding mounting hole 421 and a second extending portion 442 extending from the first extending portion 441 in a direction parallel to the axial direction L1 of the mounting hole 421. The outer surface of the side wall of the sealing sleeve 424 is provided with a mounting groove matching the rib 440. On the whole, the second extending portion 442 and the first extending portion 441 together form a hook, which allows a more stable installation of the sealing sleeve 424.

Optionally, as shown in FIG. 6, the second extending portion 442 includes an upper section 443 located above the first extending portion 441 and a lower section 444 located below the first extending portion 441. In this way, a portion of the upper section 443 corresponding to the spacing portion 422 can be tilted toward the spacing portion 422 when the spacing portion 422 is bent toward the housing 410, so that the corresponding portion of the sealing sleeve 424 can be clamped more tightly by the upper section 443 and the spacing portion 422, thereby further improving the sealing performance of the connection assembly 40.

Optionally, as shown in FIG. 6, the sealing portion 425 of the sealing sleeve 424 is located between the first extending portion 441 and the housing 410 and is radially limited by the lower section 444. On the whole, the lower section 444 of the second extending portion 442, the first extending portion 441, the flange 420, and the housing 410 together define an annular groove, and the sealing portion 425 is located in the annular groove. The lower section 444 makes the opening size of the annular groove smaller than the internal size of the annular groove, and the shape of the sealing portion 425 matches the shape of the annular groove, so that the lower section 444 radially limits the sealing portion 425 and makes the sealing portion 425 more stable, which also helps to improve the sealing performance of the sealing portion 425 to the gap between the flange 420 and the housing 410, thereby improving the sealing performance of the connecting assembly 40.

Optionally, the width of the sealing portion 425 along the radial direction R1 of the mounting hole 421 is between 3 mm and 4 mm. It is found that the sealing portion 425 with such dimension is sufficient to prevent leakage of the coolant from the gap between the flange 420 and the housing 410. Thus no additional sealing ring is required to be provided between the flange 420 and the housing 410, which simplifies the structure and assembly of the connection assembly 40.

Optionally, as also shown in FIGS. 4 and 6, each sealing sleeve 424 further includes an axial extension 451 covering the inner surface of the side wall of the corresponding mounting hole 421 and an annular wing 452 extending radially inwardly from the axial extension 451. A central opening 453 (as shown in FIG. 4) corresponding to the respective mounting hole 421 is configured in the wing 452. The connection pipe 301 extends through the central opening 453. Optionally, the diameter dimension of the central opening 453 is slightly smaller than the outer diameter dimension of the connection pipe 301, so that the connection pipe 301 can be in sealing contact with the wing 452, which also helps to improve the sealing performance of the connection assembly 40. It should be understood that the radial extension direction of the wing 452 is not in a mathematical sense.

Optionally, the sealing sleeve 424 is made of resilient rubber for ease of installation, and thus the connection pipe 301 can also easily extend through the central opening 453 and be in sealing contact with the sealing sleeve 424. For example, the sealing sleeve 424 may be made of EPDM rubber (ethylene propylene diene rubber) or, of course, other materials having similar properties. In an embodiment, the sealing portion 425, the axial extension 451, and the wing 452 are integrally formed.

As also shown in FIG. 7, two positioning pins 460 are configured on the flange 420, and two positioning holes 461 corresponding to the two positioning pins 460 are configured in the housing 410. During assembly, the two positioning pins 460 are inserted into the corresponding positioning holes 461 respectively, and each positioning pin 460 tightly fits within the corresponding positioning hole 461 to reduce or prevent the sway of flange 420 relative to the housing 410 and reduce the adverse impact on the sealing portion 425, thereby improving the sealing effect of the connecting assembly 40.

It should be understood that more than two positioning pins 460 may also be configured, and a corresponding number of the positioning holes 461 may also be configured.

In an embodiment, the two positioning pins 460 are respectively configured within the two end regions 428 of the flange 420 and offset from the fasteners 430 and the bosses 431 (as shown in FIG. 5). The two positioning holes 461 are configured to correspond to the two positioning pins 460. In another embodiment, the positioning pins 460 may be configured on the housing 410, and the positioning holes 461 may be configured on the flange 420.

### Listing of reference numerals

1 vehicle
11 chassis
12 vehicle body
2 battery pack assembly
20 battery pack body
30 cooling assembly
301 connection pipe
40 connection assembly
410 housing
420 flange
421 mounting hole
422 spacing portion
424 sealing sleeve
425 sealing portion
426 clamping section
427 middle region
428 end region
429 second fixing hole
430 fastener
431 boss
432 transition ramp
433 first fixing hole
440 rib
441 first extending portion
442 second extending portion
443 upper section
444 lower section
451 axial extension
452 wing
453 central opening
460 positioning pin
461 positioning hole
L1 axial direction
L2 lengthwise direction of boss
R1 radial direction of mounting hole

It should be noted that the foregoing examples have been provided merely for the purpose of explanation and are in no way to be construed as limiting of the present invention. While the present invention has been described with reference to an exemplary embodiment, it is understood that the words which have been used herein are words of description and illustration, rather than words of limitation. Changes may be made, within the purview of the appended claims. Although the present invention has been described herein with reference to particular means, materials and embodiments, the present invention is not intended to be limited to the particulars disclosed herein; rather, the present invention extends to the scope of the appended claims.

## Claims

1. A battery pack assembly for a vehicle comprising:
a battery pack body (20);
a cooling assembly (30) comprising a housing (410) which is connected to the battery pack body (20) and at least two connection pipes (301) which extend from an interior of the housing (410);
a connection assembly (40) comprising a flange (420) arranged on the housing (410); the flange (420) being provided with at least two mounting holes (421) which match the at least two connection pipes (301) and a spacing portion (422) located between the adjacent mounting holes (421); **characterised by**
an inner surface of a side wall of each mounting hole (421) being provided with at least one rib (440) which protrudes radially inwardly and extends circumferentially, and the rib (440) having a clamping section (426) which corresponds to the spacing portion (422); and
a sealing sleeve (424) being mounted on the rib (440) and comprising a sealing portion (425) which is located between the flange (420) and the housing (410) to seal a gap between the flange (420) and the housing (410);
wherein the flange (420) is adapted to be assembled with the housing (410), and the spacing portion (422) is adapted to be bent toward the housing (410), so that the clamping section (426) and the spacing portion (422) are in sealing contact at least with a corresponding portion of the sealing sleeve (424).

2. The battery pack assembly according to claim 1, wherein the flange (420) comprises a middle region (427) and two end regions (428) located on two sides of the middle region (427); the mounting holes (421) and the spacing portion (422) are located within the middle region (427); at least one fastener (430) is provided in each end region (428) to secure the flange (420) to the housing (410); and
a boss (431) is provided, between the flange (420) and the housing (410), on one side of each fastener (430) away from the middle region (427), so that the middle region (427) and the spacing portion (422) are bent toward the housing (410) after the flange (420) is secured to the housing (410).

3. The battery pack assembly according to claim 2, wherein the boss (431) is configured on the flange (420) or the housing (410).

4. The battery pack assembly according to claim 2, wherein the boss (431) is configured as an arc partially surrounding the corresponding fastener (430).

5. The battery pack assembly according to claim 4, wherein two ends of the boss (431) in a lengthwise direction (L2) of the boss (431) are each provided with a transition ramp (432).

6. The battery pack assembly according to claim 4, wherein the height of the boss (431) is between 0.5 mm and 1 mm.

7. The battery pack assembly according to claim 1, wherein each rib (440) comprises a first extending portion (441) protruding radially inwardly from the inner surface of the side wall of the corresponding mounting hole (421) and a second extending portion (442) extending from the first extending portion (441) in a direction parallel to an axial direction (L1) of the mounting hole (421); and an outer surface of a side wall of the sealing sleeve (424) is provided with a mounting groove matching the first extending portion (441) and the second extending portion (442).

8. The battery pack assembly according to claim 7, wherein the second extending portion (442) comprises an upper section (443) located above the first extending portion (441) and a lower section (444) located below the first extending portion (441).

9. The battery pack assembly according to claim 8, wherein the sealing portion (425) of the sealing sleeve (424) is located between the first extending portion (441) and the housing (410) and is radially limited by the lower section (444).

10. The battery pack assembly according to claim 1 or 9, wherein a width of the sealing portion (425) along a radial direction (R1) of the mounting hole (421) is between 3 mm and 4 mm.

11. The battery pack assembly according to claim 1, wherein the sealing sleeve (424) further comprises an axial extension (451) covering the inner surface of the side wall of the corresponding mounting hole (421) and an annular wing (452) extending radially inwardly from the axial extension (451);
a central opening (453) corresponding to the respective mounting hole (421) is configured in the wing (452), and the corresponding connection pipe (301) extends through the central opening (453).

12. The battery pack assembly according to claim 1, wherein at least two positioning pins (460) are configured on one of the flange (420) and the housing (410), and at least two positioning holes (461) corresponding to the at least two positioning pins (460) are configured in the other of the flange (420) and the housing (410), and each positioning pin (460) tightly fits within the corresponding positioning hole (461).

13. A vehicle, comprising:
a chassis (11), on which a vehicle body (12) is mounted; and
the battery pack assembly (2) for a vehicle according to any one of claims 1 to 12, the battery pack assembly (2) being laid on the chassis (11).

## Patentansprüche

1. Batteriepackanordnung für ein Fahrzeug, umfassend:
einem Batteriepackkörper (20);
Kühlanordnung (30), die ein Gehäuse (410), das mit dem Batteriepackkörper (20) verbunden ist, und mindestens zwei Verbindungsrohre (301) aufweist, die sich von einem Inneren des Gehäuses (410) erstrecken;
Verbindungsanordnung (40), umfassend einen Flansch (420), der an dem Gehäuse (410) angeordnet ist; wobei der Flansch (420) mit mindestens zwei Befestigungslöchern (421), die mit den mindestens zwei Verbindungsrohren (301) übereinstimmen, und einem Abstandsabschnitt (422), der zwischen den benachbarten Befestigungslöchern (421) angeordnet ist, versehen ist; **gekennzeichnet durch**
eine Innenfläche einer Seitenwand jedes Befestigungslochs (421) mit mindestens einer radial nach innen vorstehenden und sich in Umfangsrichtung erstreckenden Rippe (440) versehen ist, wobei die Rippe (440) einen Klemmabschnitt (426) aufweist, der dem Abstandsabschnitt (422) entspricht, und
Dichtungsmanschette (424), die auf der Rippe (440) montiert ist und einen Dichtungsabschnitt (425) aufweist, der zwischen dem Flansch (420) und dem Gehäuse (410) angeordnet ist, um einen Spalt zwischen dem Flansch (420) und dem Gehäuse (410) abzudichten;
wobei der Flansch (420) dazu ausgelegt ist, mit dem Gehäuse (410) zusammengebaut zu werden, und der Abstandsabschnitt (422) dazu ausgelegt ist, zum Gehäuse (410) hin gebogen zu werden, sodass der Klemmabschnitt (426) und der Abstandsabschnitt (422) in dichtendem Kontakt zumindest mit einem entsprechenden Abschnitt der Dichtungshülse (424) sind.

2. Batteriepackanordnung nach Anspruch 1, wobei der Flansch (420) einen Mittelbereich (427) und zwei Endbereiche (428) aufweist, die auf zwei Seiten des Mittelbereichs (427) angeordnet sind; die Befestigungslöcher (421) und der Abstandsabschnitt (422) innerhalb des Mittelbereichs (427) angeordnet sind; mindestens ein Befestigungselement (430) in jedem Endbereich (428) vorgesehen ist, um den Flansch (420) an dem Gehäuse (410) zu befestigen; und
Zwischen dem Flansch (420) und dem Gehäuse (410) ist auf einer dem Mittelbereich (427) abgewandten Seite jedes Befestigungselementes (430) ein Vorsprung (431) vorgesehen, sodass der Mittelbereich (427) und der Abstandsabschnitt (422) nach dem Befestigen des Flansches (420) am Gehäuse (410) zum Gehäuse (410) hin gebogen sind.

3. Batteriepackanordnung nach Anspruch 2, wobei der Vorsprung (431) an dem Flansch (420) oder dem Gehäuse (410) konfiguriert ist.

4. Batteriepackanordnung nach Anspruch 2, wobei der Vorsprung (431) als ein Bogen konfiguriert ist, der das entsprechende Befestigungselement (430) teilweise umgibt.

5. Batteriepackanordnung nach Anspruch 4, wobei zwei Enden des Vorsprungs (431) in einer Längsrichtung (L2) des Vorsprungs (431) jeweils mit einer Übergangsrampe (432) versehen sind.

6. Batteriepackanordnung nach Anspruch 4, wobei die Höhe des Vorsprungs (431) zwischen 0,5 mm und 1 mm liegt.

7. Batteriepackanordnung nach Anspruch 1, bei der jede Rippe (440) einen ersten sich erstreckenden Abschnitt (441), der von der Innenfläche der Seitenwand des entsprechenden Befestigungslochs (421) radial nach innen vorsteht, und einen zweiten sich erstreckenden Abschnitt (442) aufweist, der sich von dem ersten sich erstreckenden Abschnitt (441) in einer Richtung parallel zu einer axialen Richtung (L1) des Befestigungslochs (421) erstreckt; und eine Außenfläche einer Seitenwand der Dichtungshülse (424) mit einer Befestigungsnut versehen ist, die mit dem ersten sich erstreckenden Abschnitt (441) und dem zweiten sich erstreckenden Abschnitt (442) übereinstimmt.

8. Batteriepackanordnung nach Anspruch 7, wobei der zweite sich erstreckende Abschnitt (442) einen oberen Abschnitt (443), der oberhalb des ersten sich erstreckenden Abschnitts (441) angeordnet ist, und einen unteren Abschnitt (444), der unterhalb des ersten sich erstreckenden Abschnitts (441) angeordnet ist, umfasst.

9. Batteriepackanordnung nach Anspruch 8, wobei der Dichtungsabschnitt (425) der Dichtungshülse (424) zwischen dem ersten sich erstreckenden Abschnitt (441) und dem Gehäuse (410) angeordnet ist und radial durch den unteren Abschnitt (444) begrenzt ist.

10. Batteriepackanordnung nach Anspruch 1 oder 9, wobei eine Breite des Dichtungsabschnitts (425) entlang einer radialen Richtung (R1) des Befestigungslochs (421) zwischen 3 mm und 4 mm beträgt.

11. Batteriepackanordnung nach Anspruch 1, wobei die Dichtungshülse (424) ferner eine axiale Verlängerung (451), die die Innenfläche der Seitenwand des entsprechenden Befestigungslochs (421) bedeckt, und einen ringförmigen Flügel (452), der sich von der axialen Verlängerung (451) radial nach innen erstreckt, umfasst;
im Flügel (452) ist eine der jeweiligen Befestigungsbohrung (421) entsprechende zentrale Öffnung (453) ausgebildet, durch die sich das entsprechende Verbindungsrohr (301) erstreckt.

12. Batteriepackanordnung nach Anspruch 1, wobei mindestens zwei Positionierstifte (460) an einem von dem Flansch (420) und dem Gehäuse (410) konfiguriert sind, und mindestens zwei Positionierlöcher (461), die den mindestens zwei Positionierstiften (460) entsprechen, in dem anderen von dem Flansch (420) und dem Gehäuse (410) konfiguriert sind, und jeder Positionierstift (460) eng in das entsprechende Positionierloch (461) passt.

13. Ein Fahrzeug, bestehend aus:
einem Fahrgestell (11), auf dem eine Fahrzeugkarosserie (12) montiert ist, und
Batteriepackanordnung (2) für ein Fahrzeug nach einem der Ansprüche 1 bis 12, wobei die Batteriepackanordnung (2) auf dem Chassis (11) verlegt ist.

## Revendications

1. Bloc de batteries pour un véhicule, comprenant :
un boîtier de batterie (20);
Ensemble de refroidissement (30) comprenant un boîtier (410) relié au corps de bloc de batterie (20) et au moins deux tubes de raccordement (301) s'étendant à partir d'un intérieur du boîtier (410) ;
Ensemble de connexion (40) comprenant une bride (420) disposée sur le boîtier (410) ; la bride (420) étant pourvue d'au moins deux trous de fixation (421) qui coïncident avec les au moins deux tubes de connexion (301) et une partie d'espacement (422) disposée entre les trous de fixation adjacents (421) ; **caractérisé par** :
une surface intérieure d'une paroi latérale de chaque trou de fixation (421) est pourvue d'au moins une nervure (440) faisant saillie radialement vers l'intérieur et s'étendant circonférentiellement, la nervure (440) présentant une partie de serrage (426) correspondant à la partie d'écartement (422), et
Manchon d'étanchéité (424) monté sur la nervure (440) et comprenant une partie d'étanchéité (425) disposée entre la bride (420) et le boîtier (410) pour assurer l'étanchéité d'un espace entre la bride (420) et le boîtier (410) ;
dans lequel la bride (420) est adaptée pour être assemblée avec le boîtier (410) et la partie d'espacement (422) est adaptée pour être pliée vers le boîtier (410) de sorte que la partie de serrage (426) et la partie d'espacement (422) sont en contact étanche avec au moins une partie correspondante du manchon d'étanchéité (424).

2. Ensemble de bloc-batteries selon la revendication 1, dans lequel ladite bride (420) comprend une partie centrale (427) et deux parties d'extrémité (428) disposées sur deux côtés de ladite partie centrale (427) ; lesdits trous de fixation (421) et ladite partie d'espacement (422) étant disposés à l'intérieur de ladite partie centrale (427) ; au moins un élément de fixation (430) étant prévu dans chaque partie d'extrémité (428) pour fixer ladite bride (420) audit boîtier (410) attacher ; et
Entre la bride (420) et le boîtier (410), une saillie (431) est prévue sur un côté de chaque élément de fixation (430) opposé à la zone centrale (427), de sorte que la zone centrale (427) et la section d'écartement (422) sont recourbées vers le boîtier (410) après fixation de la bride (420) sur le boîtier (410).

3. Ensemble formant bloc-batterie selon la revendication 2, dans lequel ladite saillie (431) est configurée sur ladite bride (420) ou ledit boîtier (410).

4. Ensemble formant bloc-batterie selon la revendication 2, dans lequel ladite saillie (431) est configurée comme une feuille entourant partiellement ledit élément de fixation respectif (430).

5. Ensemble formant bloc-batteries selon la revendication 4, dans lequel deux extrémités de ladite saillie (431) dans une direction longitudinale (L2) de ladite saillie (431) sont chacune pourvues d'une rampe de transition (432).

6. Ensemble formant bloc-batterie selon la revendication 4, dans lequel la hauteur de ladite saillie (431) est comprise entre 0,5 mm et 1 mm.

7. Ensemble de bloc-batteries selon la revendication 1, dans lequel chaque nervure (440) comprend une première partie s'étendant (441) faisant saillie radialement vers l'intérieur à partir de la surface intérieure de la paroi latérale du trou de fixation respectif (421) et une seconde partie s'étendant (442) s'étendant à partir de la première partie s'étendant (441) dans une direction parallèle à une direction axiale (L1) du trou de fixation (421) ; et une surface extérieure d'une paroi latérale du manchon d'étanchéité (424) est pourvue d'une rainure de fixation qui coïncide avec la première partie s'étendant (441) et la seconde partie s'étendant (442).

8. Ensemble formant bloc-batteries selon la revendication 7, dans lequel la seconde partie d'extension (442) comprend une partie supérieure (443) disposée au-dessus de la première partie d'extension (441) et une partie inférieure (444) disposée au-dessous de la première partie d'extension (441).

9. Ensemble de bloc-batteries selon la revendication 8, dans lequel la partie d'étanchéité (425) du manchon d'étanchéité (424) est disposée entre la première partie d'extension (441) et le boîtier (410) et est délimitée radialement par la partie inférieure (444).

10. Ensemble formant bloc-batteries selon la revendication 1 ou 9, dans lequel une largeur de la partie d'étanchéité (425) le long d'une direction radiale (R1) du trou de fixation (421) est comprise entre 3 mm et 4 mm.

11. Ensemble de bloc-batteries selon la revendication 1, dans lequel le manchon d'étanchéité (424) comprend en outre un prolongement axial (451) recouvrant la surface intérieure de la paroi latérale du trou de fixation respectif (421) et une aile annulaire (452) s'étendant radialement vers l'intérieur à partir du prolongement axial (451) ;
une ouverture centrale (453) correspondent au trou de montage respectif (421) est configurée dans l'aile (452), et la conduite de connexion correspondante (301) s'étend à travers l'ouverture centrale (453).

12. Ensemble de bloc-batteries selon la revendication 1, dans lequel au moins deux broches de positionnement (460) sont configurées sur l'une de ladite bride (420) et dudit boîtier (410), et au moins deux trous de positionnement (461) correspondant auxdites au moins deux broches de positionnement (460) sont configurés dans l'autre de ladite bride (420) et dudit boîtier (410), et chaque broche de positionnement (460) s'adapte étroitement dans le trou de positionnement correspondant (461).

13. Un véhicule composé :
un châssis (11) sur lequel est montée une carrosserie de véhicule (12)
Ensemble d'empaquetage de batterie (2) pour un véhicule selon l'une quelconque des revendications 1 à 12, dans lequel l'ensemble d'empaquetage de batterie (2) est posé sur le châssis (11).
